# DEMANDE DE BREVET EUROPEEN

(11) **EP 0 599 723 A1**
(43) Date de publication de la demande: **01.06.1994**
(21) Numéro de dépôt: 93402834.1
(22) Date de dépôt: 22.11.1993
(51) Int. Cl.: G02B 6/34, G02B 6/36, G02B 6/38

(54) **Mandrin de retenue d'au moins une fibre optique**

(30) Priorité: 25.11.1992 FR 9214169
(71) Demandeur: ALCATEL CABLE INTERFACE, F-08330 Vrigne aux Bois (FR)
(72) Inventeur: Hakoun, Roland, F-95330 Domont (FR); Reslinger, Michel, F-91070 Bondoufle (FR); Godard, Gerard, F-94370 Noiseau (FR)
(74) Mandataire: Schaub, Bernard

(57) **Abrégé**

Le mandrin comporte un corps présentant une surface plane rainurée en regard de laquelle est monté un mors pivotant de serrage.

Il est caractérisé en ce que le corps est constitué par un support allongé et plat (1), qui présente une échancrure (5) dans une face plane supérieure, et par une plaquette (2) complémentaire de l'échancrure et rainurée pour recevoir une ou plusieurs fibres, qui est montée amovible dans l'échancrure du support.

Application: outil pour le traitement de fibres optiques.

## Description

La présente invention concerne un mandrin de retenue d'au moins une fibre optique, en vue d'une opération de dégainage, coupe, soudure ou autre à réaliser sur chaque fibre qu'il retient.

Le document FR-A-2590959 décrit un dispositif de préhension d'une fibre optique, qui est constitué par un corps et un mors de serrage et présente une forme globale convenable pour son maintien dans un système à douille cylindrique de serrage ou à trois mors à 120° venant en prise sur la périphérie du corps.

Dans ce dispositif connu, le corps présente deux méplats latéraux, parallèles et opposés. Un premier de ces méplats définit une surface plane dans laquelle est creusée une rainure rectiligne de positionnement de la fibre gainée. La fibre en place dans cette rainure reste saillante sur la surface plane de ce premier méplat. Le mors est monté pivotant autour d'un axe de rotation, parallèle à la rainure, qui le solidarise au corps et permet sa mise en position ouverte ou en position fermée contre le premier méplat. Ce mors présente lui-même une surface plane d'appui élastique sur la fibre gainée en place dans sa rainure, quand le mors est en position fermée. Cet appui est rendu élastique par une fente réalisée dans le mors, à proximité de sa surface d'appui pour permettre la déformation de cette dernière. Cette surface d'appui du mors considéré en position fermée n'est pas parallèle à la surface plane rainurée du corps et ne permet pas la retenue de plusieurs fibres disposées côte à côte.

Ce dispositif comporte, en outre des moyens d'ouverture du mors, qui sont constitués par des ressorts travaillant en compression. Il comporte également des moyens de verrouillage du mors dans une position d'ouverture limitée et une position fermée, cette ouverture limitée étant juste suffisante pour permettre le passage de la fibre gainée et la mise en place de la fibre dans la rainure. Ces moyens de verrouillage sont relativement complexes. Ils sont situés contre le deuxième méplat et rendus d'accès peu aisé.

La présente invention a pour but de simplifier considérablement le dispositif connu précédent et de permettre en outre, à souhait, la retenue d'une fibre gainée ou de plusieurs fibres gainées alors disposées en nappe.

Elle a pour but un mandrin de retenue d'au moins une fibre optique, comportant un corps, une surface plane rainurée sur ledit corps pour le positionnement de chaque fibre optique gainée, un mors de serrage monté pivotant sur ledit corps parallèlement à chaque rainure entre une position d'ouverture relativement à ladite surface plane rainurée et une position de fermeture contre ladite surface plane rainurée, des moyens de verrouillage dudit mors dans la position de fermeture et des moyens de déverrouillage associés, caractérisé en ce que ledit corps est formé par un support, allongé et dit plat, comportant une face plane supérieure munie d'une échancrure, et par une plaquette, complémentaire de ladite échancrure et montée amovible dans ladite échancrure, présentant sur celle de ses faces venant à niveau avec ladite face supérieure dudit support au moins une rainure adaptée au positionnement d'un nombre limité donné de fibres gainées à retenir dans ledit mandrin, ladite face supérieure dudit support et la face rainurée de ladite plaquette en place dans ladite échancrure constituant ensemble ladite surface plane rainurée.

Ce mandrin peut présenter, en outre, au moins l'une des caractéristiques additionnelles suivantes:
- ladite plaquette rainurée est choisie parmi un jeu de plaquettes rainurées différemment les unes des autres et interchangeables sur ledit support,
- chaque plaquette présente une zone de rétention de chaque fibre gainée sur sa face rainurée, ladite zone interrompant chaque rainure de la plaquette concernée et étant située en regard dudit mors en position de fermeture sur la plaquette considérée en place dans ladite échancrure du support,
- ledit mors forme un couvercle plat, articulé sur l'un des bords dit arrière dudit support, ayant une face intérieure plane munie d'une bande saillante et élastiquement déformable d'appui sur la face rainurée de la plaquette en place,
- les moyens de verrouillage sont constitués par un crochet élastique prévu sur le couvercle, s'encliquetant à force sous le bord avant du support,
- les moyens de déverrouillage sont constitués par un levier monté sur ledit support et pivotant en regard du crochet encliqueté,
- Le couvercle est monté sur l'une des parties terminales dites respectivement droite et gauche du support, pour définir un mandrin résultant gauche ou droit,
- Les plaquettes sont identifiées en fonction des fibres qu'elles peuvent recevoir et/ou en fonction de leur montage dans un mandrin gauche ou droit.

Les caractéristiques et avantages de la présente invention ressortiront de la description faite ci-après d'un exemple de réalisation illustré dans les dessins ci-annexés. Dans ces dessins:
- La figure 1 est une vue de dessus d'un mandrin selon l'invention, montré en position dite fermée,
- les figures 2 et 3 sont deux vues en coupe de ce mandrin, selon les lignes II-II et III-III de la figure 1,
- la figure 4 est une autre vue en coupe partielle du mandrin, selon la ligne IV-IV de la figure 1,
- la figure 5 est une vue en perspective d'une plaquette de guidage de fibres optiques, pouvant se substituer à celle en place dans le mandrin de la figure 1,
- la figure 6 illustre une base d'un poste opératoire d'équipement utilisant ce mandrin.

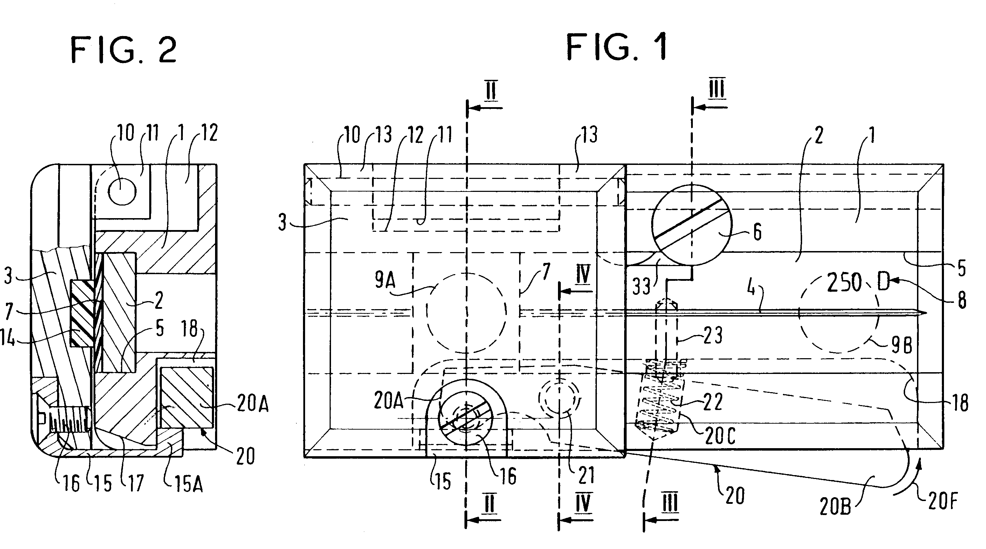

Le mandrin représenté dans la figure 1 est affecté à la retenue d'une seule fibre optique gainée.

Les figures 1 à 3 montrent qu'il comporte un support rectangulaire et relativement plat 1, une plaquette rainurée 2, montée amovible dans la face supérieure plane du support 1, et un couvercle 3, rabattable sur la face supérieure du support 1 et la face supérieure de la plaquette 2. Ce couvercle 3 forme un mors de serrage de la fibre optique gainée, non représentée, mise en place sur la plaquette rainurée. Il s'étend sur toute la largeur du support, mais ne recouvre de préférence qu'une partie de sa longueur. Cette partie recouverte est avantageusement l'une ou l'autre des parties terminales du support, le mandrin étant alors un mandrin gauche ou droit, lors de son utilisation du côté gauche ou droit sur un poste de travail. Dans ces figures, le mandrin illustré est un mandrin droit, dont le couvercle 3 recouvre la partie terminale de gauche du support 1. Il lui correspond un mandrin gauche non représenté, déduit du mandrin droit par symétrie et dont le couvercle recouvre alors la partie terminale de droite du support.

La plaquette 2 présente une rainure longitudinale en Vé 4, selon l'axe de sa face supérieure. La face supérieure rainurée de cette plaquette en place sur le support 1 est à niveau avec la face supérieure du support. Elle assure le positionnement sur le support d'une fibre gainée unique qui est reçue dans la rainure 4 et reste légèrement saillante sur la plaquette et le support. Elle rend alors le support affecté à cette fibre unique.

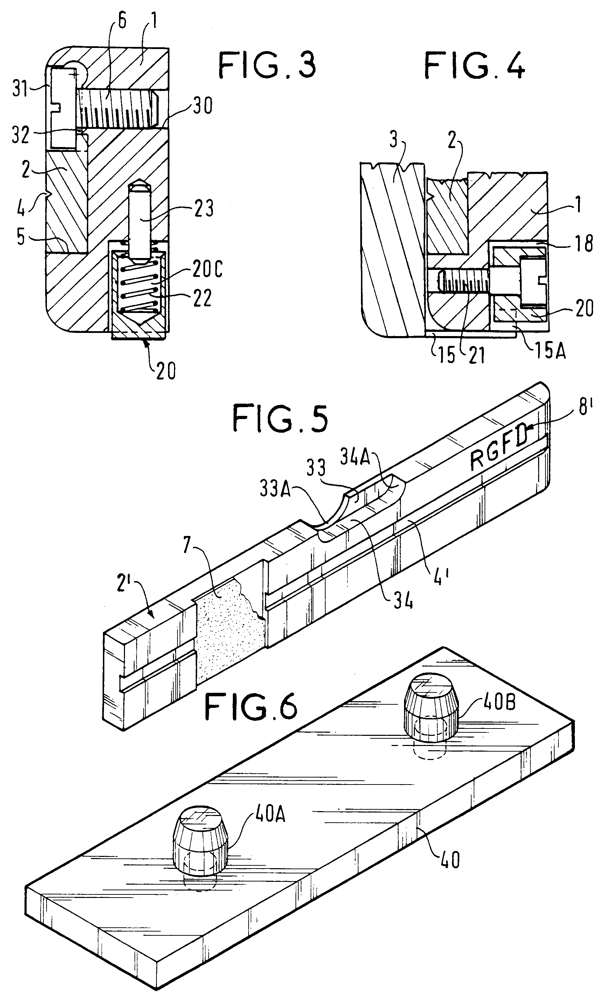

Le support 1 présente une échancrure 5 creusée dans sa face supérieure, sur sa longueur, dans laquelle se monte la plaquette 2 ou une autre plaquette semblable, telle que celle 2' de la figure 5. L'échancrure et les plaquettes sont de même section droite, en particulier rectangulaire, ceci à un léger jeu près de mise en place de l'une des plaquettes dans l'échancrure du support. Le support, les plaquettes et le couvercle sont de préférence métalliques.

Une vis 6 ancrée dans le support 1 assure le blocage de la plaquette rainurée en place. Elle permet le cas échéant de retirer cette plaquette en place et de la remplacer par une autre.

On précise immédiatement ci-après les seules différences entre la plaquette 2 et la plaquette 2' de la figure 5.

Alors que la rainure 4 en Vé de la plaquette 2 assure le positionnement d'une fibre gainée unique, la plaquette 2' présente une rainure 4' de section en U. Cette rainure 4'est affectée au positionnement côte à côte d'un nombre défini de fibres gainées, sa largeur étant choisie en fonction de ce nombre et du diamètre des fibres gainées, pour éviter tout jeu des fibres dans le U. Les fibres en place dans ce U restent par ailleurs légèrement saillantes au-dessus de la face supérieure rainurée de cette plaquette 2'.

En variante non représentée, un autre type de plaquette semblable peut présenter plusieurs rainures en Vé, parallèles et faiblement espacées, de positionnement d'autant de fibres gainées individuelles.

Les dispositions identiques sont décrites en regard de la plaquette 2 et sont traduites par des références identiques reportées en correspondance dans la figure 5.

La plaquette 2 présente dans une zone 7, centrée sous le couvercle 3, un élément de rétention de la fibre gainée en place dans sa rainure, quand le couvercle est fermé. Cet élément de rétention est désigné par la référence 7 de la zone concernée. Il évite tout glissement longitudinal de la fibre gainée, lors d'une sollicitation extérieure exercée sur cette fibre. Il est constitué par un patin de friction, qui est encastré dans la face supérieure de la plaquette. Ce patin interrompt la rainure 4 et s'étend sur toute la largeur de la plaquette ou une partie de celle-ci. Il vient à niveau ou reste en très léger retrait sur la face supérieure rainurée, sans entraîner une modification du positionnement linéaire de la fibre gainée logée dans la rainure et reposant directement sur le patin.

En variante, l'effet de rétention de la fibre gainée dans cette zone non rainurée 7 peut être obtenu par un traitement local de surface, créant des micro-aspérités superficielles de rétention, pour que cette zone constitue alors directement l'élément de rétention.

Le couvercle 3 est monté pivotant autour d'un axe de rotation latéral 10, le solidarisant au support 1. Cet axe est situé à proximité de l'arête définie par la face supérieure et la face dite arrière du support. Il traverse une patte alésée 11, prévue sous le bord arrière du couvercle et saillante sous la face intérieure de celui-ci. A cette patte 11 correspond une fenêtre de dégagement 12 dans la face arrière du support. Cette articulation 11-12 permet d'obtenir une disposition dite parallèle de la face intérieure du couvercle 3 et de celle supérieure du support 1, lorsque le couvercle est en position fermée (figure 2), et de laisser un léger jeu entre elles. Les deux parties arrière 13 du couvercle, définies sur sa face intérieure de part et d'autre de la patte 11, constituent deux butées de fin de course en ouverture du couvercle, par leur appui contre la face arrière du support. Dans cette position d'ouverture maximale, le couvercle définit un angle très légèrement supérieur à 90° avec le support et reste stable dans cette position ouverte.

Ce couvercle 3 est équipé d'une bande médiane élastiquement déformable 14, rapportée ou partiellement encastrée dans sa face intérieure et légèrement saillante sous celle-ci. Cette bande vient s'étendre le long de la partie terminale médiane du support 1 équipé de la plaquette rainurée, quand le couvercle est fermé. Elle est centrée sous la plaquette et recouvre totalement au moins la rainure de cette plaquette 2 ou de toute autre plaquette semblable telle que 2' considérée en place. Elle assure un appui élastique sur la ou les fibres gainées en place dans la rainure de la plaquette et contribue avec l'élément de rétention 7 à la tenue en traction de chaque fibre gainée, quand le couvercle est fermé.

Le couvercle 3 est en outre verrouillé en fermeture par un crochet 15, solidaire du bord avant du couvercle par une vis 16. L'extrémité recourbée 15A du crochet vient s'encliqueter élastiquement sous le bord avant du support 1. Le support 1 présente en correspondance une rampe inclinée 17, formée sur sa face avant, pour le guidage de l'extrémité 15A du crochet jusqu'à un logement de verrouillage 18, prévu dans la face inférieure du support et ouvert sur son bord avant. Ce verrouillage en fermeture du couvercle est obtenu directement lorsque le couvercle est déjà rabattu contre le support 1, par une simple pression d'appui sur la partie avant de sa face extérieure.

Un moyen 20 de déverrouillage du crochet de fermeture 15 est monté dans le logement 18, ce logement s'étendant à cet effet sur la quasi-totalité de la longueur de la face inférieure du support. Ce moyen de déverrouillage 20 est une manette, montée pivotante parallèlement au support 1, dans le logement 18. Son axe d'articulation 21 est défini par une vis, qui traverse librement la manette et ancrée dans l'épaisseur du support 1 (figure 4). Il est à relativement faible distance de l'extrémité 20A de la manette, qui vient en vis-à-vis du crochet, pour le déverrouillage de celui-ci.

Cette manette 20 est sollicitée en position inactive de repos, pour laquelle son extrémité 20A n'est pas en contact avec celle 15A du crochet, par un ressort 22 travaillant en compression. Ce ressort est monté en appui contre la manette et le bord vertical du logement 18. Il est situé entre l'axe 21 et la deuxième extrémité 20B de la manette. Une cavité 20C est prévue sur le bord intérieur de la manette pour le maintien du ressort en appui contre la manette. Une goupille 23 montée dans le support 1 et saillante sur le bord vertical du logement 18 assure en correspondance le maintien du ressort contre ce bord vertical (figure 3). Dans cette position de repos, l'extrémité 20B de la manette est saillante sur l'avant du support 1. Son actionnement selon la flèche 20F schématise la mise en position active de la manette, pour laquelle l'extrémité 20A pousse l'extrémité 15A du crochet hors du logement et libère le couvercle pour son ouverture complète à la main.

Le blocage de la plaquette 1 dans le support 1 est précisé en regard des figures 1 et 3, mais également en regard de la figure 5 en ce qui concerne les seules dispositions correspondantes prévues identiquement sur les plaquettes 2 et 2'. Il est assuré latéralement à l'aide de la vis 6 se bloquant sur l'un des bords dits arrière de la plaquette considérée en place, de préférence à un blocage central possible au niveau de la rainure 4 ou 4', pour éviter tout risque d'endommagement de la rainure et de mauvais positionnement ultérieur de la ou des fibres dans la rainure.

Le support 1 présente à cet effet dans sa partie arrière un trou taraudé 30, proche de l'échancrure 5 et prolongé par un logement terminal 31 pour la tête de vis. Ce logement 31 débouche sur la face supérieure du support et tronque en hauteur le bord 32 à son niveau de l'échancrure, pour s'étendre en partie dans celle-ci en l'absence de plaquette en place. Le bord arrière de la plaquette est échancré en correspondance sur une partie de sa hauteur et de sa longueur, dans une zone quasi-médiane. Il définit un méplat inférieur 33 de même hauteur que celle du bord tronqué 32, servant d'appui à la tête de vis, et un bord vertical 34 en retrait pour le dégagement nécessaire à la tête de vis. A l'une des extrémités du méplat, le bord vertical 34 forme une transition terminale en arc de cercle 34A, épousant le contour de la tête de vis quand la plaquette est en place et bloquée. A l'opposé un trou 33A est prévu à travers le méplat, pour des facilités de réalisation.

Un jeu de plaquettes rainurées différemment telles que 2 et 2' est donc associé à un même support de ce mandrin droit. Un autre jeu de plaquettes symétriques des plaquettes 2 et 2' est pareillement associé à un mandrin gauche. Ces plaquettes sont identifiées par des inscriptions schématisées en 8 ou 8', traduisant le diamètre de la fibre unique ou le nombre et éventuellement le diamètre des fibres multiples admises dans leur rainure. L'une des inscriptions, dans ce cas la lettre D ou en variante la lettre G, traduit l'utilisation de la plaquette concernée sur un mandrin droit, ou en variante sur un mandrin gauche. Ces inscriptions sont réalisées de préférence sur celle des extrémités de leur face rainurée, qui n'est pas recouverte par le couvercle du mandrin résultant.

La figure 1 montre en outre, que le support 1 présente également deux trous 9A et 9B, ou autres moyens analogues, prévus sur sa face inférieure, pour le montage du mandrin résultant sur un poste de travail équipé de moyens complémentaires. Ces trous sont centrés sur l'axe longitudinal médian de la face inférieure du support. Ils sont de préférence à des distances différentes du bord gauche ou droit le plus proche de chacun d'eux ou de section différente l'un de l'autre, pour réaliser un éventuel détrompage en relation avec une butée prévue sur le poste de travail pour l'un et/ou l'autre des bords gauche et droit du support.

La figure 6 montre une base 40 d'un poste opératoire d'équipement ou machine utilisant le mandrin. Cette base est de préférence métallique et aimantée. Elle présente deux doigts 40A, 40B saillants sur sa face supérieure, ou des moyens complémentaires de ceux prévus sur la face inférieure du mandrin, pour un montage correct de ce dernier. Le maintien en place du mandrin est assuré par l'action de la base aimantée retenant en place le support métallique du mandrin. Bien entendu, le maintien en place du mandrin peut être obtenue différemment et en particulier par des moyens mécaniques.

## Revendications

**1/** Mandrin de retenue d'au moins une fibre optique, comportant un corps, une surface plane rainurée sur ledit corps pour le positionnement de chaque fibre optique gainée, un mors de serrage monté pivotant sur ledit corps parallèlement à chaque rainure entre une position d'ouverture relativement à ladite surface plane rainurée et une position de fermeture contre ladite surface plane rainurée, des moyens de verrouillage dudit mors dans la position de fermeture et des moyens de déverrouillage associés, caractérisé en ce que ledit corps est formé par un support (1), relativement allongé et dit plat, comportant une face plane supérieure munie d'une échancrure (5), et par une plaquette (2, 2'), complémentaire de ladite échancrure et montée amovible dans ladite échancrure, présentant sur celle de ses faces venant à niveau avec ladite face supérieure dudit support au moins une rainure (4, 4') adaptée au positionnement d'un nombre limité donné de fibres gainées à retenir dans ledit mandrin, ladite face supérieure dudit support et la face rainurée de ladite plaquette en place dans ladite échancrure constituant ensemble ladite surface plane rainurée.

**2/** Mandrin selon la revendication 1, caractérisé en ce que ladite plaquette rainurée est choisie parmi un jeu de plaquettes (2, 2') rainurées différemment les unes des autres et interchangeables sur ledit support.

**3/** Mandrin selon la revendication 2, caractérisé en ce que chaque plaquette présente une zone (7) de rétention de chaque fibre gainée sur sa face rainurée, ladite zone (7) interrompant chaque rainure de la plaquette concernée et étant située en regard dudit mors (3) en position de fermeture sur la plaquette considérée en place dans ladite échancrure du support (1).

**4/** Mandrin selon l'une des revendications 1 à 3, caractérisé en ce que ledit mors (3) forme un couvercle plat, articulé sur l'un des bords dit arrière dudit support (1), ayant une face intérieure plane munie d'une bande saillante et élastiquement déformable (14) d'appui sur la face rainurée de la plaquette en place.

**5/** Mandrin selon la revendication 4, caractérisé en ce que ledit couvercle est sensiblement de même largeur que ledit support et en ce que lesdits moyens de verrouillage sont constitués par un crochet élastique (15), prévu sur un bord dit avant dudit couvercle à l'opposé de l'articulation du couvercle, ayant une extrémité s'encliquetant sous le bord avant correspondant dudit support, par pression exercée sur le couvercle considéré préalablement en position de fermeture mais non verrouillé.

**6/** Mandrin selon la revendication 5, caractérisé en ce que lesdits moyens de déverrouillage sont constitués par une manette (20), solidaire dudit support et pivotante en regard dudit crochet parallèlement aux faces supérieure et inférieure opposées dudit support.

**7/** Mandrin selon la revendication 6, caractérisé en ce que la face inférieure dudit support (1) est échancrée pour définir un logement inférieur avant pour ladite manette (20) et l'extrémité encliquetée dudit crochet.

**8/** Mandrin selon l'une des revendications 4 à 7, caractérisé en ce que ledit couvercle (3) est de longueur moindre que celle dudit support et de la plaquette en place et est articulé sur l'une des parties terminales dites respectivement droite et gauche dudit bord arrière du support, pour définir en correspondance un mandrin résultant gauche ou droit.

**9/** Mandrin selon l'une des revendications 1 à 7, caractérisé en ce qu'il comporte un moyen de blocage latéral (6) de la plaquette en place, constitué par une vis ancrée dans ledit support à proximité de ladite échancrure (5) ayant une tête terminale reçue sur le bord attenant et tronqué à son niveau (32) de ladite échancrure (5) et sur un méplat (33) d'appui prévu sur le bord correspondant arrière de ladite plaquette.

**10/** Mandrin selon l'une des revendications 1 à 9, caractérisé en ce qu'il comporte en outre dans la face inférieure dudit support des moyens de montage (9A, 9B) sur une base (40) d'un poste de travail, elle-même équipée de moyens complémentaires (41A, 41B).

**11/** Ma ndrin selon la revendication 10, caractérisé en ce que des moyens de maintien en place du mandrin sur ladite base sont prévus sur au moins la base.

**12/** Mandrin selon la revendication 11, caractérisé en ce que le mandrin est métallique et ladite base aimantée pour définir ainsi lesdits moyens de maintien en place dudit mandrin.

**13/** Mandrin selon la revendication 2, caractérisé en ce que chaque plaquette porte des premières identifications (8, 8') définissant le nombre et le diamètre de chaque fibre gainée qu'elle peut recevoir.

**14/** Mandrin selon la revendication 8, caractérisé en ce que chaque plaquette porte des deuxièmes identifications (D, G) définissant son affectation de montage dans un mandrin droit ou gauche.
